# EUROPEAN PATENT APPLICATION

(11) **EP 3 500 032 A1**
(43) Date of publication of application: **19.06.2019**
(21) Application number: 17839141.3
(22) Date of filing: 14.07.2017
(51) Int. Cl.: H04W 72/12, H04L 27/26, H04W 72/04

(54) **BASE STATION, USER APPARATUS, AND SIGNAL TRANSMISSION METHOD**

(30) Priority: 10.08.2016 JP 2016158267
(71) Applicant: NTT DOCOMO, INC., Chiyoda-ku Tokyo 100-6150 (JP)
(72) Inventor: YASUKAWA, Shinpei, Tokyo 100-6150 (JP); NAGATA, Satoshi, Tokyo 100-6150 (JP); KAKISHIMA, Yuichi, Palo Alto, California 94304 (US)
(74) Representative: Hoffmann Eitle
(86) International application number: PCT/JP2017/025679
(87) International publication number: WO 2018/030067

(57) **Abstract**

A base station of a radio communication system is for performing communication by multiplexing a first radio frame having a predetermined TTI length and a second radio frame having a TTI length shorter than the predetermined TTI length. The base station includes a scheduler configured to multiplex a signal of the second radio frame in a time period of the first radio frame other than a time period in which a reference signal is transmitted in the first radio frame; and a transmitter configured to multiplex a signal of the first radio frame and the signal of the second radio frame, and configured to transmit, to user equipment, the signal of the first radio frame and the signal of the second radio frame that are multiplexed.

## Description

### TECHNICAL FIELD

The present invention relates to a base station, user equipment, and a signal transmitting method.

### BACKGROUND ART

In a 3rd generation partnership project (3GPP), a radio communication system called a fifth generation (5G) has been studied. In the 5G, it is assumed that wide frequencies from a low frequency band such as long term evolution (LTE) to a frequency band higher than that of the LTE are used. Particularly, since a propagation loss increases in a high frequency band, application of massive multi input multi output (MIMO) of performing beam forming with a narrow beam width has been studied to complement the increase in propagation loss. The massive MIMO is large-scale MIMO in which plural (for example, 100 elements) antenna elements are installed on a base station side and can concentrate field intensity on a narrow area by the beam forming, thereby securing coverage.

As a method of implementing the beam forming, digital beam forming (Fig. 1) in which the same number of digital analog converters (DAC) as the number of transmitting antenna elements are provided and baseband signal processing is performed to correspond to the number of transmitting antenna elements has been studied. In addition, analog beam forming (Fig. 2) in which beam forming is implemented using a variable phase shifter in a radio frequency (RF) circuit has been studied. In addition, hybrid beam forming (Fig. 3) in which a beam forming process is implemented using both the baseband signal processing and the variable phase shifter in the RF circuit by combining the digital beam forming and the analog beam forming has been studied.

In the 5G, various use cases such as ultra-reliable and low latency communications (URLLC) of realizing ultralow-delay (for example, 0.5 ms) and high-reliability (for example, a receiving probability of 99.999%) and enhanced mobile broadband (eMBB) of high-speed data communication have been proposed and a radio frame structure and a radio resource allocating method which are suitable for such use cases have been studied. For example, in the URLLC, use of a radio frame structure having a TTI length shorter than that of the eMBB to achieve the ultralow-latency has been studied. In order to support both use cases of the URLLC and the eMBB, a case in which plural different radio frame structures are mixed in the same carrier frequency is supposed.

### Prior Art Document

### [Non-Patent Document]

Non-Patent Document 1: NTT DOCOMO Technical Journal "5G Radio Accessing Technique," NTT DOCOMO, INC., Jan. 2016

### SUMMARY OF THE INVENTION

### [PROBLEM TO BE SOLVED BY THE INVENTION]

In a case in which a radio frame having a predetermined TTI length (hereinafter, referred to as a "normal radio frame") and a radio frame having a TTI length shorter than the predetermined TTI length (hereinafter, referred to as a "short radio frame") are mixed and operated in the same carrier frequency, when analog beam forming (including hybrid beam forming, which is true in the following description) is applied to communication using the short radio frame, demodulation processing which is performed by user equipment (UE) performing communication using a normal radio frame is affected and thus there is a possibility that the user equipment may not appropriately perform communication.

The disclosed technique is developed in consideration of the above-mentioned circumstances and an object is to provide a technique enabling user equipment to appropriately communicate when a radio frame having a predetermined TTI length and a radio frame having a TTI length shorter than the predetermined TTI length are mixed and operated.

### [MEANS FOR SOLVING THE PROBLEM]

A base station according to disclosed technology is a base station of a radio communication system for performing communication by multiplexing a first radio frame having a predetermined TTI length and a second radio frame having a TTI length shorter than the predetermined TTI length, the base station including a scheduler configured to multiplex a signal of the second radio frame in a time period of the first radio frame other than a time period in which a reference signal is transmitted in the first radio frame; and a transmitter configured to multiplex a signal of the first radio frame and the signal of the second radio frame, and configured to transmit, to user equipment, the signal of the first radio frame and the signal of the second radio frame that are multiplexed.

### [ADVANTAGE OF THE INVENTION]

According to the disclosed technique, it is possible to provide a technique enabling user equipment to appropriately communicate when a radio frame having a predetermined TTI length and a radio frame having a TTI length shorter than the predetermined TTI length are mixed and operated.

### BRIEF DESCRIPTION OF DRAWINGS

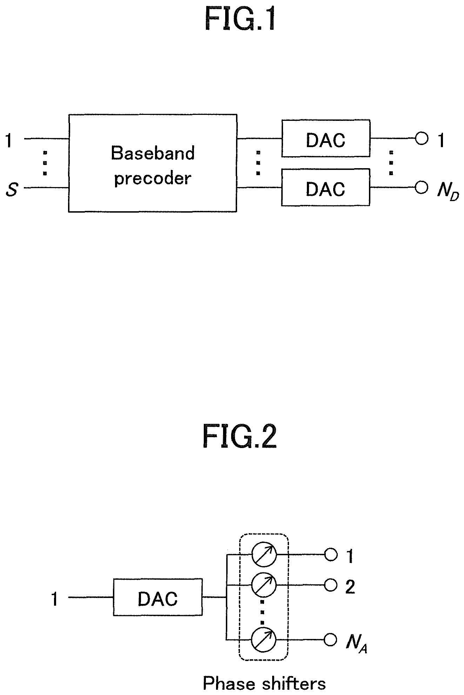

Fig. 1 is a diagram illustrating an example of a configuration of a circuit that performs digital beam forming;
Fig. 2 is a diagram illustrating an example of a configuration of a circuit that performs analog beam forming;

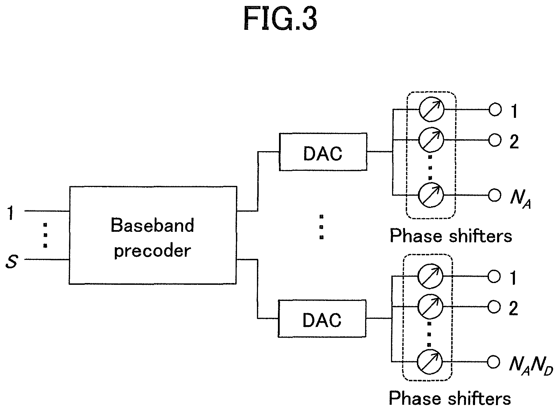

Fig. 3 is a diagram illustrating an example of a configuration of a circuit that performs hybrid beam forming;

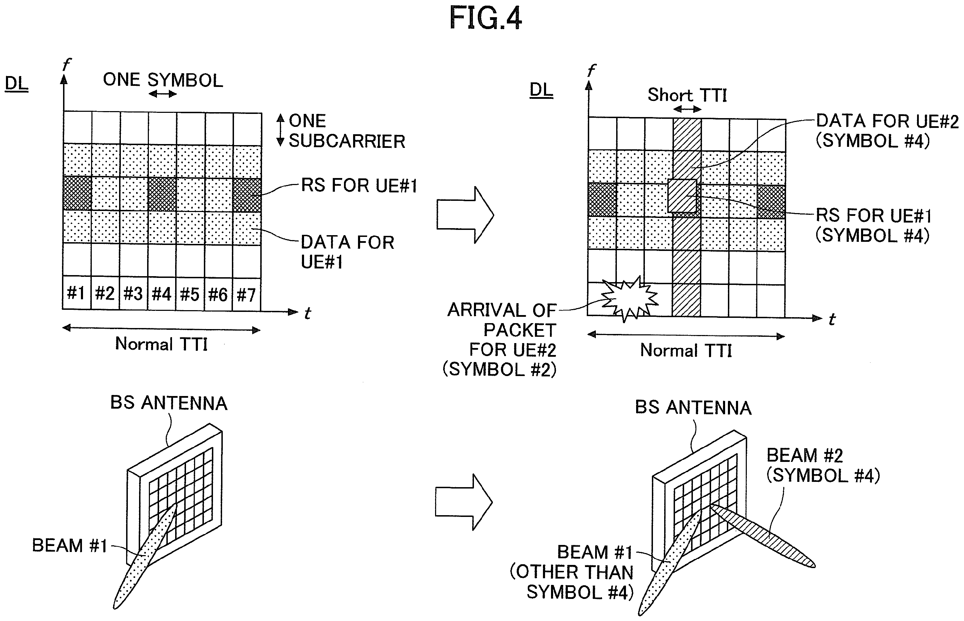

Fig. 4 is a diagram illustrating a problem;

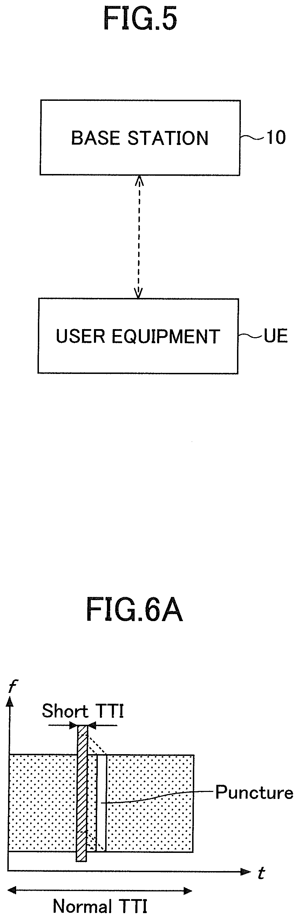

Fig. 5 is a diagram illustrating an example of a configuration of a radio communication system according to an embodiment;
Fig. 6A is a diagram illustrating a multiplexing example of signals having different TTI lengths;

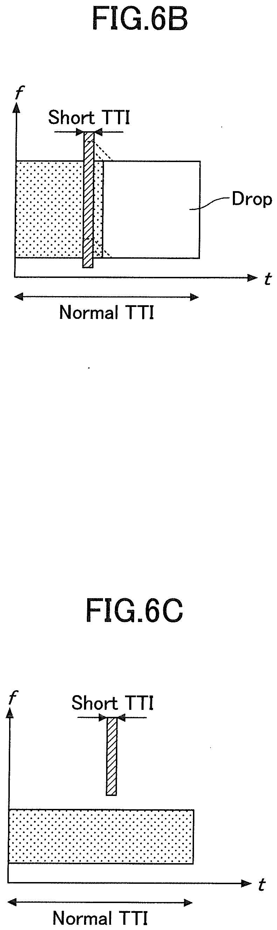

Fig. 6B is a diagram illustrating a multiplexing example of signals having different TTI lengths;
Fig. 6C is a diagram illustrating a multiplexing example of signals having different TTI lengths;

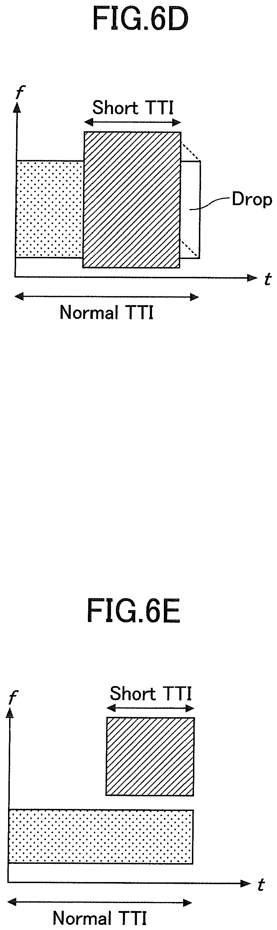

Fig. 6D is a diagram illustrating a multiplexing example of signals having different TTI lengths;
Fig. 6E is a diagram illustrating a multiplexing example of signals having different TTI lengths;

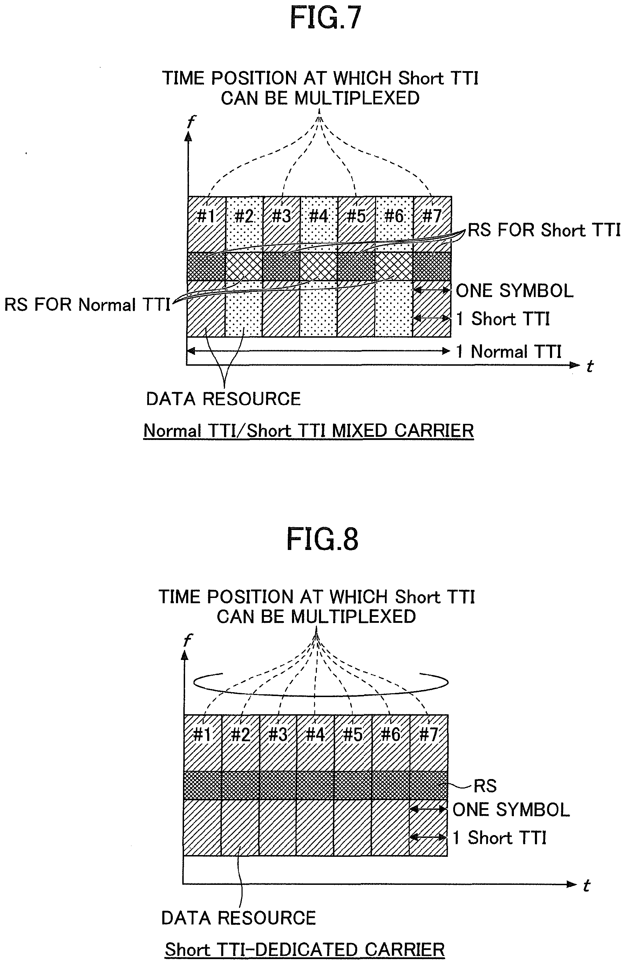

Fig. 7 is a diagram illustrating a multiplexing example of a signal of a normal TTI and signal of a short TTI;
Fig. 8 is a diagram illustrating an example of a short TTI-dedicated carrier;

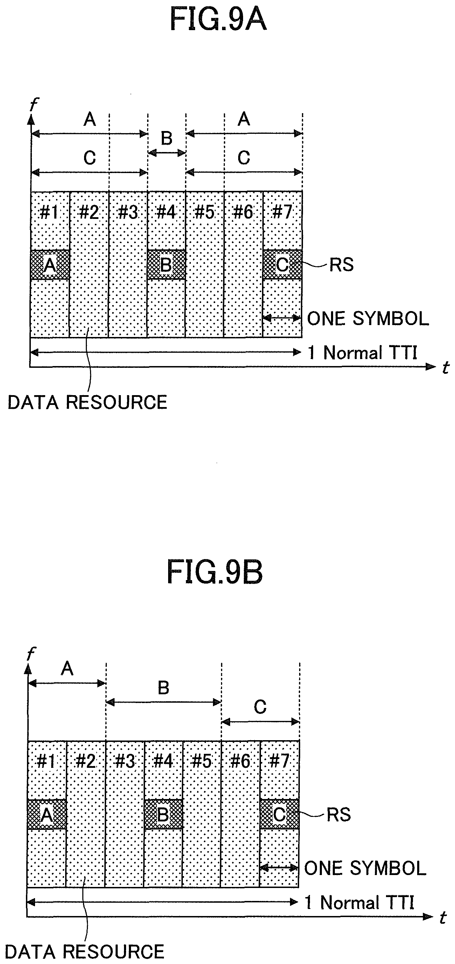

Fig. 9A is a diagram illustrating a setting example of a symbol group;
Fig. 9B is a diagram illustrating a setting example of a symbol group;

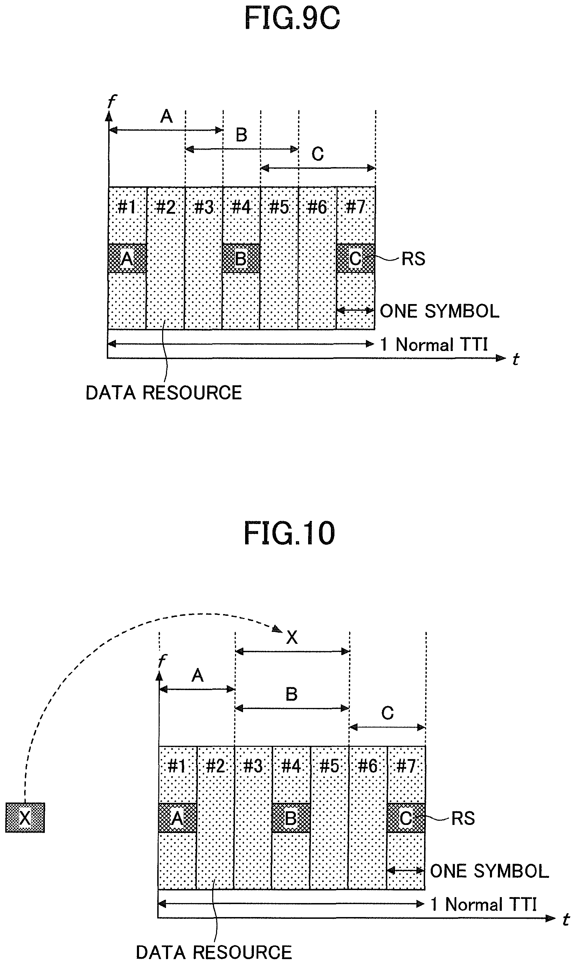

Fig. 9C is a diagram illustrating a setting example of a symbol group;
Fig. 10 is a diagram illustrating a setting example of symbol groups including reference signals of different TTIs;

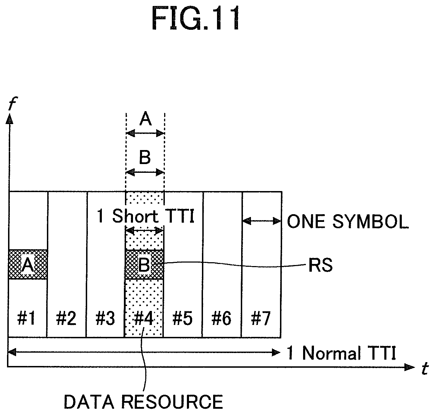

Fig. 11 is a diagram illustrating a setting example in which a symbol group is set in a short TTI;

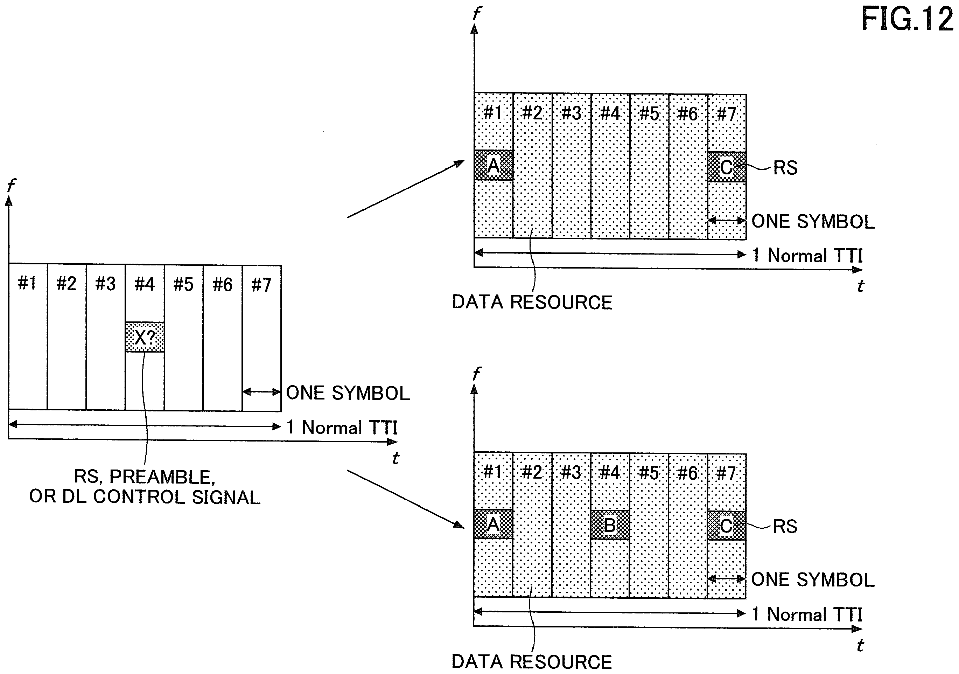

Fig. 12 is a diagram illustrating an operation of switching a reference signal used for demodulation;

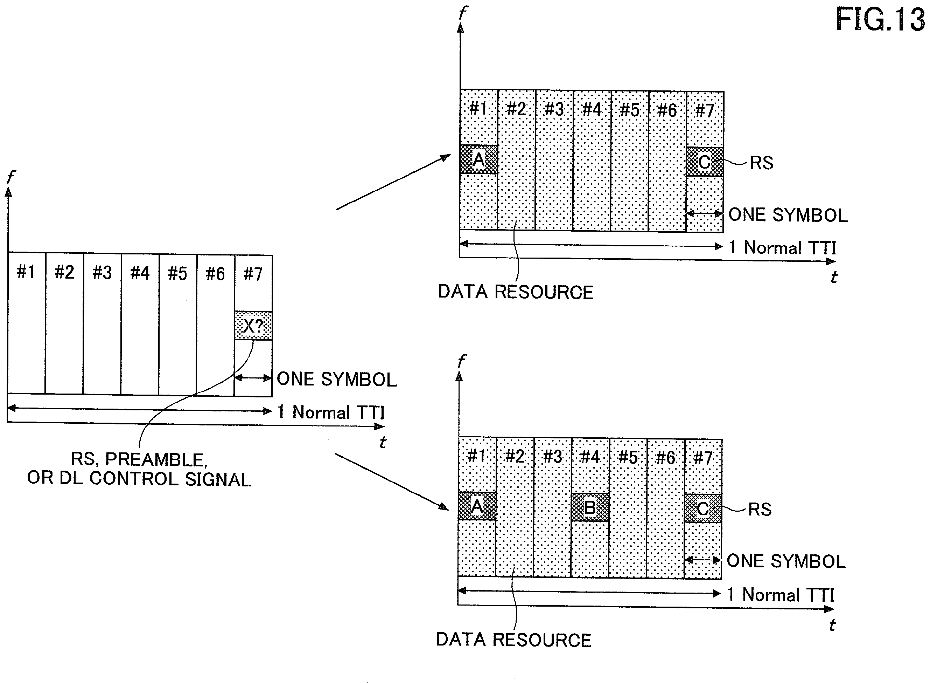

Fig. 13 is a diagram illustrating an operation of switching a reference signal used for demodulation;

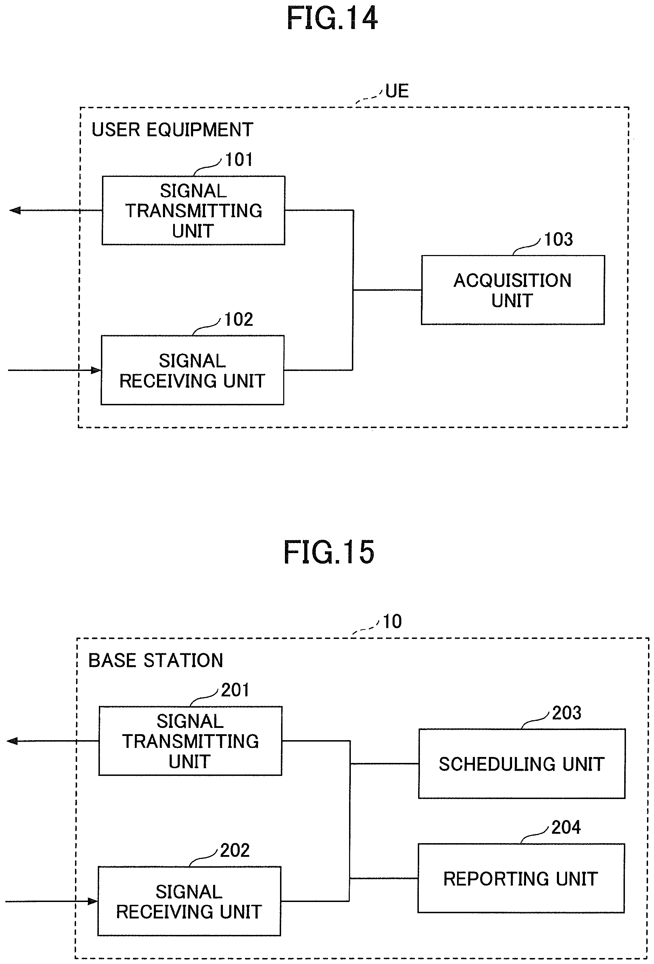

Fig. 14 is a diagram illustrating an example of a functional configuration of user equipment according to the embodiment;
Fig. 15 is a diagram illustrating an example of a functional configuration of a base station according to the embodiment; and

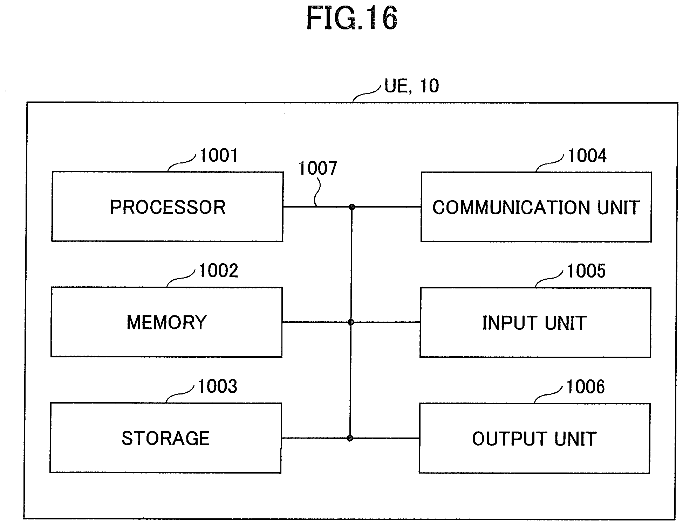

Fig. 16 is a diagram illustrating an example of a hardware configuration of user equipment and a base station according to the embodiment.

### [EMBODIMENTS OF THE INVENTION]

A possibility is specifically described using FIG. 4 such that, when a normal radio frame and a short radio frame are mixed and operated in a same carrier frequency, and when analog beam forming is applied to communication using a short radio frame, a UE that performs communication using a normal radio frame may be unable to appropriately communicate. In Fig. 4, a transmission timing interval (TTI) in the normal radio frame is referred to as a "normal TTI" and a TTI in the short radio frame is referred to as a "short TTI." UE#1 denotes user equipment UE that perform communication using a normal radio frame and UE#2 denotes user equipment UE that performs communication using a short radio frame. It is assumed that a base station communicates with units of user equipment UE by performing beam forming based on analog beam forming.

The left side in Fig. 4 illustrates a state in which downlink (DL) communication using beam #1 is performed between the base station and the user equipment UE#1. In the state illustrated on the left side in the drawing, it is assumed that the user equipment UE#1 demodulates data in one TTI using reference signals (RS) of symbol #1, symbol #4, and symbol #7.

Here, as illustrated on the right side of Fig. 4, it is assumed that a packet for UE#2 arrives at a physical layer from an upper layer in the base station at the timing of symbol #2 and beam #2 is applied to only a section of symbol #4 to transmit data using a short radio frame.

In this case, beam forming of beam #2 is applied to the reference signal RS for UE#1 multiplexed to symbol #4. Then, for example, the user equipment UE#1 recognizing that the same beam forming is applied to the reference signals of symbol #1, symbol #4, and symbol #7 tries to demodulate data on the basis of an erroneous channel estimation result and there is a possibility that data may not be correctly demodulated.

The above-mentioned problem is assumed to occur mainly when analog beam forming is performed, but is not limited thereto and can also occur when digital beam forming is performed.

Hereinafter, embodiments of the invention are described with reference to the accompanying drawings. The embodiments described below are only examples and embodiments of the invention are not limited to the following embodiments. For example, a radio communication system according to the embodiments is assumed to be an LTE-based system, but the invention is not limited to the LTE and can be applied to another scheme. In the specification and the appended claims, "LTE" is used in a wide meaning including fifth-generation communication schemes corresponding to Releases 10, 11, 12, 13, and 14 of 3GPP and releases subsequent thereto as well as communication schemes corresponding to Releases 8 and 9 of 3GPP.

A term "radio frame" which is used in this specification and the appended claims does not refer to a "radio frame" (10 msec) which is defined in the current LTE, but refers to a general time unit.

### <System Configuration>

Fig. 5 is a diagram illustrating an example of a configuration of a radio communication system according to an embodiment. As illustrated in Fig. 5, the radio communication system according to this embodiment includes a base station 10 and user equipment UE. One base station 10 and one user equipment UE are illustrated in the example of Fig. 5. However, the radio communication system according to the embodiment is not limited to the example of FIG. 5. For example, there may be a plurality of base stations and a plurality of units of user equipment UE.

The base station 10 has a function of performing digital beam forming, analog beam forming, or hybrid beam forming. In the following description, "beam forming" refers to beam forming which is performed using any of the digital beam forming, the analog beam forming, and the hybrid beam forming.

The base station 10 has a function of performing communication using radio frame having a predetermined TTI length (a normal radio frame) and a function of performing communication using a radio frame having a TTI length shorter than the predetermined TTI length (a short radio frame). The "normal radio frame" is simply used to have a meaning relative to the "short radio frame" and does not refer to the same radio frame as a radio frame in specific radio access technology (for example, LTE). The "normal radio frame" may be referred to as a "long radio frame" for comparison with the "short radio frame."

The user equipment UE has a function of performing communication using a normal radio frame and a function of performing communication using a short radio frame. The user equipment UE may have only one of the function of performing communication a normal radio frame and the function of performing communication using a short radio frame, but it is premised that the user equipment UE according to this embodiment has at least the function of performing communication using a normal radio frame unless otherwise specified.

In the following description, a transmission timing interval (TTI) in a normal radio frame is referred to as a normal TTI, and a TTI in a short radio frame is referred to as a short TTI. The normal TTI may be referred to as a long TTI for comparison with the short TTI.

The normal TTI and the short TTI each include plural symbols in the time direction. The numbers of symbols of the normal TTI and the short TTI can be arbitrary numbers, and are not limited to, for example, the same number of symbols as the number of symbols in the LTE (for example, 12 symbols or 14 symbols). In the following description, it is assumed that the number of symbols of the normal TTI is seven, but this is only for convenience of illustration and the number of symbols is not limited thereto. The number of symbols of the normal TTI and the number of symbols of the short TTI may be equal to or different from each other. A cyclic prefix (CP) length of the symbols of the normal TTI and the CP length of the symbols of the short TTI may be equal to or different from each other. A subcarrier interval in the normal TTI and a subcarrier interval in the short TTI may be the same subcarrier interval or different subcarrier intervals.

In the following description, a "signal of a normal TTI" refers to a signal which is transmitted using a normal radio frame and a "signal of a short TTI" refers to a signal which is transmitted using a short radio frame.

<Example of Method of Multiplexing Signals Having Different TTI Lengths>

Here, an example of a method of multiplexing a signal of a normal TTI and a signal of a short TTI is described below. In the example illustrated in Fig. 6A, a part of a signal of the normal TTI is punctured (thinned) and a signal of the short TTI is multiplexed in the punctured section. In the example illustrated in Figs. 6B and 6D, transmission of a signal of the normal TTI is dropped in the middle and a signal of the short TTI is multiplexed in the dropped section. In the example illustrated in Figs. 6C and 6D, a signal of the normal TTI and a signal of the short TTI are frequency-multiplexed.

The base station 10 and the user equipment UE according to this embodiment can perform communication using any multiplexing method of the above-mentioned plural multiplexing methods, and this embodiment is suitable particularly for a case in which a signal of the normal TTI and a signal of the short TTI are time-multiplexed as illustrated in Figs. 6A, 6B, and 6D.

### <Processing Sequence>

Subsequently, plural processing sequences are described as a specific processing sequence which is performed by the user equipment UE and the base station 10 according to this embodiment. The user equipment UE and the base station 10 according to this embodiment may perform all the processing sequences of the following processing sequences or may perform any one or more of the processing sequences.

### <(First) Processing Sequence>

In the (first) processing sequence, a reference signal included in a signal of the normal TTI is protected by limiting a period in which a signal of the short TTI can be multiplexed in the signal of the normal TTI (for example, a period corresponding to one or more symbols). In other words, the base station 10 multiplexes and transmits a signal of the short TTI in a period of the signal of the normal TTI other than the period in which a reference signal is transmitted.

Fig. 7 illustrates an example in which a signal of the normal TTI and a signal of the short TTI are multiplexed in the same carrier (the same cell). In the example illustrated in Fig. 7, reference signals for the normal TTI are mapped on symbols #2, #4, and #6. In this case, the base station 10 schedules a signal of the short TTI to, at least, a symbol of any one of symbols #1, #3, #5, and #7. Accordingly, even when beam forming different from that of the signal of the normal TTI is applied to transmit the signal of the short TTI, it is possible to suppress an influence to the reference signal included in the signal of the normal TTI.

Here, the base station 10 may broadcast information indicating a period of the signal of the normal TTI in which there is a possibility a signal of the short TTI is to be scheduled (multiplexed) (hereinafter referred to as "multiplexing information") using broadcast information or radio resource control (RRC) signaling to the user equipment UE. Specifically, the multiplexing information may be indices of one or more symbols in which there is a possibility that the short TTI is to be scheduled. Accordingly, the user equipment UE supporting the short TTI can grasp a symbol position at which there is a possibility that the short TTI is to be scheduled.

The base station 10 may broadcast a mapping type of a reference signal (such as an index indicating a mapping pattern of the reference signal) to the user equipment UE receiving a signal of the normal TTI using a downlink control CH, broadcast information, or RRC signaling. The number of symbols on which reference signals are mapped can be changed depending on a state of the user equipment UE (a state such as a type of a connected bearer, a bearer state, and/or DRX) which can receive the short TTI, and reference signals can be mapped on more symbols, for example, in the normal TTI in which the short TTI is not multiplexed.

When the multiplexing information sets that a signal of the short TTI is scheduled in all the time, a short TTI-dedicated carrier in which the signal of the short TTI is transmitted in all the time can be realized as illustrated in Fig. 8. The base station 10 can also switch a carrier in which the normal TTI/short TTI illustrated in Fig. 7 are multiplexed (mixed) and the short TTI-dedicated carrier in which only the signal of the short TTI illustrated in Fig. 8 is transmitted at an arbitrary timing using the multiplexing information.

The base station 10 may transmit the multiplexing information in only a specific sub-frame. Accordingly, the user equipment UE can monitor only the specific sub-frame to receive the multiplexing information. In this case, the base station 10 transmits the multiplexing information indicating the short TTI-dedicated carrier (in other words, multiplexing information indicating that a signal of the short TTI is scheduled in all the time) in only a specific sub-frame. Accordingly, the timing at which switching to the short TTI-dedicated carrier is performed can be defined.

In the radio communication system, some time/frequency resources of time/frequency resources allocated to a downlink control channel may be prepared as time/frequency resources for scheduling the short TTI, and information indicating the time/frequency resources on which the downlink control channel which is used to schedule the short TTI is mapped may be included in the multiplexing information. Accordingly, the user equipment UE receiving a signal of the short TTI can narrow the time/frequency resources of the downlink control channel to be monitored and reduce energy consumption of a battery. The resources which are prepared as the time/frequency resources for scheduling the short TTI in the downlink control channel may be limited to a search space specific to each user equipment or may include a common search space.

When the user equipment UE does not know that some time of the normal TTI is punctured to transmit a signal of the short TTI, the user equipment UE considers the signal of the short TTI to be a part of the signal of the normal TTI and performs a decoding process and thus there is a possibility that decoding performance will degrade. In order to avoid this situation, the user equipment UE in which both the signal of the normal TTI and the signal of the short TTI are scheduled considers that a reference signal and data are not mapped (not multiplexed) in the period of the signal of the normal TTI in which the signal of the short TTI is mapped. Accordingly, the base station 10 and the user equipment UE can perform rate matching except for the resources on which the signal of the short TTI is mapped among the resources in which the normal TTI is scheduled and the degradation of the decoding performance in the user equipment UE can be avoided. In another method, the user equipment UE receiving a signal of the normal TTI considers that a signal of the short TTI is multiplexed in symbols in which a specific synchronization signal, a reference signal, or control information is multiplexed, and the base station 10 may multiplex the signal of the short TTI in the symbols in which the specific synchronization signal, the reference signal, or the control information is multiplexed. It is possible to appropriately perform rate matching between the base station 10 and the user equipment UE and to avoid degradation of the decoding performance in the user equipment UE.

The (first) processing sequence has been described hitherto. According to the (first) processing sequence, even when beam forming different from that of the signal of the normal TTI is applied to transmit the signal of the short TTI, it is possible to suppress an influence to the reference signal included in the signal of the normal TTI.

### <(Second) Processing Sequence>

In the (second) processing sequence, the base station 10 broadcasts a position of a reference signal, which can be used to demodulate a signal of the normal TTI, to the units of user equipment UE. More specifically, the base station 10 broadcasts information for correlating one or more reference signals included in the normal TTI with periods of the normal TTI in which the reference signals can be used for demodulation (hereinafter referred to as "correlation information") to the units of user equipment UE. The user equipment UE receiving the correlation information uses the reference signals indicated by the correlation information to demodulate the signal of the normal TTI for each period corresponding to the reference signals.

In the correlation information, one reference signal and a period in which the reference signal can be used for demodulation are referred to as a "symbol group" for the purpose of convenience.

A specific example of the symbol group is described below with reference to Fig. 9. In the example illustrated in Figs. 9A to 9C, a symbol group A, a symbol group B, and a symbol group C are configured in the correspondence information. In Fig. 9A, symbol group A indicates that reference signal A can be used to demodulate signals of symbols #1 to #3 and symbols #5 to #7 in one normal TTI. Symbol group C indicates that, in one normal TTI, when signals of symbols #1 to #3 and signals #5 to #7 are to be demodulated, the reference signal C can be used. Symbol group B indicates that, in one normal TTI, when a signal of symble #4 is to be demodulated, the reference signal B can be used. The user equipment UE acquiring the correlation information illustrated in Fig. 9 (A operates to demodulate the signals of symbols #1 to #3 and symbols #5 to #7 of the signals of the normal TTI using reference signals A and C and to demodulate the signal of symbol #4 of the signals of the normal TTI using reference signal B. In the example illustrated in Fig. 9A, it is assumed that at least reference signals A and C are mapped on the same antenna port (that is, the same beam forming is applied thereto).

Similarly, in the example illustrated in Fig. 9B, symbol group A denotes that reference signal A can be used to demodulate signals of symbols #1 and #2 in one normal TTI. Symbol group B denotes that reference signal B can be used to demodulate signals of symbols #3 to #5. Symbol group C denotes that reference signal C can be used to demodulate signals of symbols #6 and #7. The user equipment UE acquiring the correlation information illustrated in Fig. 9B operates to demodulate the signals of symbols #1 and #2 of the signals of the normal TTI using reference signal A, to demodulate the signals of symbols #3 to #5 of the signals of the normal TTI using reference signal B, and to demodulate the signals of symbols #6 and #7 of the signals of the normal TTI using reference signal C.

Similarly, in the example illustrated in Fig. 9C, symbol group A denotes that reference signal A can be used to demodulate signals of symbols #1 to #3 in one normal TTI. Symbol group B denotes that reference signal B can be used to demodulate signals of symbols #3 to #5. Symbol group C denotes that reference signal C can be used to demodulate signals of symbols #5 to #7. The user equipment UE acquiring the correlation information illustrated in Fig. 9C operates to demodulate the signals of symbols #1 and #2 using reference signal A, to demodulate the signal of symbol #3 using reference signal A and/or reference signal B, to demodulate the signal of symbol #4 of the signals of the normal TTI using reference signal B, to demodulate the signal of symbol #5 using reference signal B and/or reference signal C, and to demodulate the signals of symbols #6 and #7 using reference signal C.

In Figs. 9B and 9C, reference signals A to C may be mapped on different antenna ports (that is, different beam forming may be applied thereto) or may be mapped on the same antenna port.

As illustrated in Fig. 9B, when the reference signals in plural symbol groups are transmitted through the same antenna port (that is, transmitted using the same beam forming), it is possible to simplify a channel estimating process on the user equipment UE side. On the other hand, when the reference signals are transmitted through different antenna ports in neighboring periods (that is, different beam forming is applied thereto) and the periods overlap each other as illustrated in Fig. 9C, it is possible to achieve high channel estimation accuracy.

In this embodiment, since it is assumed that plural reference signals are included in a normal TTI, a case in which a reference signal of a specific symbol group is available for demodulating a symbol of another symbol group is supposed. Therefore, in the (second) processing sequence, the base station 10 may broadcast information for correlating the symbol groups (for example, which may be referred to as quasi co-located (QCL) information) to the user equipment UE using the RRC signaling or the downlink control channel.

The user equipment UE receiving the information for correlating the symbol groups can perform a demodulation process on a signal of a certain symbol group using a reference signal of another symbol group which is correlated by the "information for correlating the symbol groups." For example, in Fig. 9B, when symbol group A and symbol group B are correlated with each other, the user equipment UE can perform an operation of performing frequency/time synchronization and/or automatic gain control (AGC) processing using reference signal A of symbol group A in advance before demodulating the symbols (symbols #3 to #5) of symbol group B using reference signal B. The information for correlating the symbol groups may include information indicating common characteristics of the reference signals. Examples of the characteristics of the reference signals include path loss, delay spread, Doppler spread, Doppler shift, average gain, and average delay.

### (Modified Example)

In the examples described above with reference to Figs. 9A to 9C, a symbol group is set to include reference signals and symbols in the same TTI, but a symbol group may be set to extend over TTIs. A specific example is described below with reference to Fig. 10. In the example illustrated in Fig. 10, symbol group X including reference signal X which is transmitted in another TTI is set in the same period as symbol group B. In this case, user equipment UE can perform an operation of performing frequency/time synchronization and/or AGC processing using reference signal X transmitted in a past TTI in advance when demodulating the signal of the symbols (symbols #3 to #5) of symbol group B using reference signal B. A symbol group may include a synchronization signal which is transmitted in another TTI. Accordingly, it is possible to improve demodulation performance of user equipment UE and to shorten a demodulation time.

The base station 10 may broadcast reference signals which are available other than a reference signal included in a short TTI to the user equipment UE in which the short TTI is scheduled using RRC signaling or downlink control channel. In this case, this can be realized by applying the correlation information and the symbol groups to a short TTI. Specifically, as illustrated in Fig. 11, this can be realized by setting symbol group A and symbol group B in the symbol in which a signal of the short TTI is transmitted. Accordingly, for example, the user equipment UE can use a reference signal (for example, which may be a common reference signal of the units of user equipment UE) include in a downlink control channel which is transmitted in the head of the normal TTI to demodulate the short TTI, thereby improving demodulation performance.

The base station 10 may broadcast assist information used for demodulation in a TTI in addition to the correlation information to the user equipment UE using the RRC signaling or the downlink control channel. The assist information is, for example, a channel estimating method (for example, a reference signal averaging method or a time interpolating method) and/or a variation in beam forming (beam sweeping) in the TTI. The user equipment UE can perform an operation of interpolating channel estimation results of symbols to perform demodulation by time-interpolating the channel estimation results based on the reference signals without averaging the channel estimation results using the assist information, for example, when beam sweeping is applied in the TTI, thereby improving demodulation performance.

The (second) processing sequence has been described hitherto. According to the (second) processing sequence, even when beam forming different from that of the signal of the normal TTI is applied to transmit the signal of the short TTI, it is possible to suppress an influence to the reference signal included in the signal of the normal TTI.

### <(Third) Processing Sequence>

In a (third) processing sequence, user equipment UE switches a reference signal to be used for demodulation on the basis of whether information (hereinafter referred to as "switching information" for the purpose of convenience) indicating one or more reference signals to be used to demodulate a signal in a normal TTI is acquired from a base station 10 when receiving the signal transmitted in the normal TTI is received.

The switching information may be information implicitly a position of a reference signal to be used for demodulation and examples thereof include a reference signal of a short TTI and a predetermined preamble. The switching information may be information explicitly indicating a position of a reference signal to be used for demodulation and an example thereof is downlink control information. When the switching information is the information implicitly a position of a reference signal to be used for demodulation, the base station 10 may set a position of a reference signal to be used for demodulation when the switching information is detected and a position of a reference signal to be used for demodulation when the switching information is not detected in the user equipment UE using an upper layer signaling such as RRC signaling in advance.

A specific example is described below with reference to Fig. 12. A signal "X" illustrated on the left side of Fig. 12 denotes switching information and is a reference signal of a short TTI in the example illustrated in Fig. 12. It is premised that the reference signal X is transmitted from the base station 10 only when a signal of the short TTI is transmitted in symbol #4. It is premised that the user equipment UE knows that the reference signals used to demodulate a signal of the normal TTI when the switching information is detected are reference signals A and C and the reference signals used to demodulate the signal of the normal TTI when the switching information is not detected are reference signals A, B, and C.

When it is detected that the reference signal X of the short TTI is transmitted in symbol #4, the user equipment UE receiving the signal of the normal TTI demodulates the signal of the normal TTI using reference signals A and C as illustrated in the right-upper side of Fig. 12. On the other hand, when the reference signal X of the short TTI is not transmitted in symbol #4 (it is assumed that transmission of reference signal B is detected in the example illustrated in Fig. 12), the user equipment demodulates the signal of the normal TTI using reference signals A, B, and C as illustrated on the right-lower side of Fig. 12.

When the switching information is a reference signal of a short TTI or a predetermined preamble, the base station 10 may broadcast a signal sequence used for the reference signal of the short TTI (or the preamble), a threshold value of a received level at which the reference signal of the short TTI (or the preamble) is considered to be detected, a signal sequence used for the reference signal of the normal TTI, and a threshold value of a received level at which the reference signal of the normal TTI is considered to be detected to the user equipment UE in advance using the RRC signaling or the like, which may be defined in advance as a standard specification. The user equipment UE detects whether the reference signal of the short TTI is received by blind-detecting the reference signal (or the preamble) using the signal sequence used for the reference signal of the short TTI (or the preamble) and the signal sequence used for the reference signal of the normal TTI.

In the example illustrated in Fig. 12, a transmission position of signal "X" and a transmission position of reference signal B are depicted to be the same. However, the transmission position of signal "X" is not limited to this. For example, as illustrated in Fig. 13, the switching information (signal "X" in Fig. 13) may be transmitted using resources at any temporal position or frequency position.

The user equipment UE may perform an operation of first trying to demodulate the signal of the normal TTI (that is, try to demodulate the signal of the normal TTI using reference signals A, B, and C) as illustrated on the right-lower side of Fig. 12 or 13, detecting whether the switching information is transmitted when the demodulation fails, and trying to demodulate the signal of the normal TTI using reference signals A and C as illustrated on the right-upper side of Fig. 12 or 13 when the switching information is detected. Accordingly, it is possible to increase the speed of the demodulation processing.

The (third) processing sequence has been described hitherto. According to the (third) processing sequence, even when beam forming different from that of the signal of the normal TTI is applied to transmit the signal of the short TTI, it is possible to suppress an influence to the reference signal included in the signal of the normal TTI.

### <Complement of Usage of Reference Signal>

The reference signals described in the (first to third) processing sequences are assumed to be reference signals which are available for channel estimation in the user equipment UE. However, use of a reference signal is not limited to this. For example, the reference signals described in the (first to third) processing sequences may be reference signals which are available for frequency/time synchronization in the user equipment UE or may be reference signals which are available for the AGC in the user equipment UE. The reference signals described in the (first to third) processing sequences may be reference signals which have a Quasi-Co-Located (QCL) relationship with other reference signals. The reference signals which have a QCL relationship with other reference signals are intended to be reference signals which are the same as other reference signals in at least one of delay spread, Doppler spread, Doppler shift, average gain, and average delay.

### <Functional Configuration>

### (User Equipment)

Fig. 14 is a diagram illustrating an example of a functional configuration of user equipment according to the embodiment. As illustrated in Fig. 14, the user equipment UE includes a signal transmitting unit 101, a signal receiving unit 102, and an acquisition unit 103. Fig. 14 illustrates only functional units, which are particularly associated with the embodiment of the invention, in the user equipment UE, and the user equipment UE has at least a function, which is not illustrated, for performing operations based on the LTE. The functional configuration illustrated in Fig. 14 is only an example. The functional subdivision and the names of the functional units are not particularly limited as long as the operations associated with the embodiment can be performed. A part of the processes (such as all or part of the (first to third) processing sequences or a modified example of a part thereof) in the user equipment UE described hitherto may be performed.

The signal transmitting unit 101 has a function of generating various signals of a physical layer from a signal to be transmitted to the base station 10 and wirelessly transmitting the generated signals. The signal receiving unit 102 has a function of wirelessly receiving various signals from the base station 10 and acquiring a signal of an upper layer from the received signals of the physical layer. The signal transmitting unit 101 and the signal receiving unit 102 have a function of communication with the base station 10 using a signal of a first radio frame having a predetermined TTI length and a signal of a second radio frame having a TTI length shorter than the predetermined TTI length.

The signal receiving unit 102 may receive a signal transmitted in the first radio frame having a predetermined TTI length and may perform demodulation for each period corresponding to reference signals using one or more received reference signals on the basis of the correlation information at the time of demodulating the received signal. The signal receiving unit 102 may perform demodulation additionally using one or more reference signals included in another TTI at the time of demodulating the received signal.

The signal receiving unit 102 may switch a reference signal to be used for demodulation on the basis of whether the acquisition unit acquires the information when the signal transmitted in the first radio frame is received.

The acquisition unit 103 has a function of acquiring information for correlating one or more reference signals included in one TTI with periods of the one TTI in which the reference signals are available for demodulation from the base station 10 using broadcast information, RRC signaling, or a downlink control channel. The acquisition unit 103 has a function of acquiring information indicating one or more reference signals to be used to demodulate a signal of the first radio frame.

The acquisition unit 103 acquires the "multiplexing information," the "correlation information," the "information for correlating symbol groups," the "information indicating common characteristics of reference signals," the "assist information," and the "switching information" which are used in the (first to third) processing sequences from the base station 10.

### (Base Station)

Fig. 15 is a diagram illustrating an example of a functional configuration of a base station according to the embodiment. As illustrated in Fig. 15, the base station 10 includes a signal transmitting unit 201, a signal receiving unit 202, a scheduling unit 203, and a reporting unit 204. Fig. 15 illustrates only functional units, which are particularly associated with the invention, in the base station 10, and the base station 10 has at least a function, which is not illustrated, for performing operations based on the LTE. The functional configuration illustrated in Fig. 15 is only an example. The functional subdivision and the names of the functional units are not particularly limited as long as the operations associated with the embodiment can be performed. A part of the processes (such as all or part of the (first to third) processing sequences or a modified example of a part thereof) in the base station 10 described hitherto may be performed.

The signal transmitting unit 201 has a function of generating various signals of a physical layer from a signal of an upper layer to be transmitted from the base station 10 and wirelessly transmitting the generated signals. The signal transmitting unit 201 has a function of multiplexing a signal of a first radio frame having a predetermined TTI length and a signal of a second radio frame having a TTI length shorter than the predetermined TTI length and transmitting the signal of the first radio frame and the signal of the second radio frame that are multiplexed to the user equipment.

The signal receiving unit 202 has a function of wirelessly receiving various radio signals from the user equipment UE and acquiring a signal of an upper layer from the received signals of the physical layer. The signal receiving unit 102 may have a function of receiving a signal of a first radio frame having a predetermined TTI length and a signal of a second radio frame having a TTI length shorter than the predetermined TTI length from the user equipment UE.

The scheduling unit 203 has a function of allocating radio sources for mapping a signal to be transmitted to the user equipment UE. The scheduling unit 203 has a function of multiplexing the signal of the second radio frame having a TTI length shorter than the predetermined TTI length in a period of the first radio frame having the predetermined TTI length other than the period in which a reference signal is transmitted in the first radio frame.

The reporting unit 204 has a function of broadcasting information indicating a period of the first radio frame having the predetermined TTI length in which there is a possibility that a signal of the second radio frame having a TTI length shorter than the predetermined TTI length is to be multiplexed to the user equipment. The reporting unit 204 has a function of broadcasting the "multiplexing information," the "correlation information," the "information for correlating symbol groups," the "information indicating common characteristics of reference signals," the "assist information," and the "switching information" which are used in the (first to third) processing sequences to the user equipment UE.

### <Hardware Configuration>

The block diagrams (Figs. 14 and 15) which are used above to describe the embodiment illustrate blocks in the units of functions. The functional blocks (constituent units) are embodied in a combination of hardware and/or software. Means for embodying the functional blocks is not particularly limited. That is, the functional blocks may be embodied by one unit which is physically and/or logically coupled or may be embodied by two or more units which are physically and/or logically separated and which are connected directly and/or indirectly (for example, in a wired and/or wireless manner) .

For example, the base station 10 and the user equipment UE in the embodiment may function as computers that perform the processes of the measurement method according to the invention. Fig. 16 is a diagram illustrating an example of a hardware configuration of the base station 10 and the user equipment UE according to the invention. The base station 10 and the user equipment UE may be physically configured as a computer device including a processor 1001, a memory 1002, a storage 1003, a communication unit 1004, an input unit 1005, an output unit 1006, and a bus 1007.

In the following description, a word "unit" may be referred to as a circuit, a device, a unit, or the like. The hardware configurations of the base station 10 and the user equipment UE may include one or more units illustrated in the drawing or may not include some units.

The functions of the base station 10 and the user equipment UE are realized by causing hardware such as the processor 1001 and the memory 1002 to read predetermined software (a program) and causing the processor 1001 to perform computation and to control communication of the communication unit 1004 and reading and/or writing of data in the memory 1002 and the storage 1003.

The processor 1001 controls the computer as a whole, for example, by operating an operating system. The processor 1001 may be constituted by a central processing unit (CPU) including an interface with peripherals, a control unit, a calculation unit, a register, and the like. For example, the signal transmitting unit 201, the signal receiving unit 202, the scheduling unit 203, and the reporting unit 204 of the base station 10 and the signal transmitting unit 101, the signal receiving unit 102, and the acquisition unit 103 of the user equipment UE and may be embodied by the processor 1001.

The processor 1001 reads a program (program codes), a software module, or data from the storage 1003 and/or the communication unit 1004 to the memory 1002 and performs various processes in accordance therewith. As the program, a program causing a computer to perform at least a part of the operations described above in the embodiment is used. For example, the signal transmitting unit 201, the signal receiving unit 202, the scheduling unit 203, and the reporting unit 204 of the base station 10 and the signal transmitting unit 101, the signal receiving unit 102, and the acquisition unit 103 of the user equipment UE may be embodied by a control program which is stored in the memory 1002 and operated by the processor 1001 or the other functional blocks may be similarly embodied. Various processes described above have been described to be performed by a single processor 1001, but may be simultaneously or sequentially performed by two or more processors 1001. The processor 1001 may be mounted as one or more chips. The program may be transmitted from a network via an electric communication line.

The memory 1002 is a computer-readable recording medium and may be formed, for example, at least one of a read only memory (ROM), an erasable programmable ROM (EPROM), an electrically erasable programmable ROM (EEPROM), and a random access memory (RAM). The memory 1002 may be referred to as a register, a cache, or a main memory (a main storage unit). The memory 1002 can store a program (program codes), a software module, or the like which can be executed to perform the signal transmitting method according to the embodiment of the invention.

The storage 1003 is a computer-readable recording medium and may be constituted, for example, by at least one of an optical disc such as a compact disc ROM (CD-ROM), a hard disk drive, a flexible disk, a magneto-optical disk (such as a compact disk, a digital versatile disk, or a Blu-ray (registered trademark) disk), a smart card, a flash memory (such as a card, a stick, or a key drive), a floppy (registered trademark) disk, and a magnetic strip. The storage 1003 may be referred to as an auxiliary storage unit. Examples of the recording medium may include a database including the memory 1002 and/or the storage 1003, a server, and another appropriate medium.

The communication unit 1004 is hardware (a transceiver device) that allows communication between computers via a wired and/or wireless network and is referred to as, for example, a network device, a network controller, a network card, or a communication module. For example, the signal transmitting unit 201 and the signal receiving unit 202 of the base station 10 and the signal transmitting unit 101 and the signal receiving unit 102 of the user equipment UE may be embodied by the communication unit 1004.

The input unit 1005 is an input device (such as a keyboard, a mouse, a microphone, a switch, a button, or a sensor) that receives an input from the outside. The output unit 1006 is an output device (such as a display, a speaker, or an LED lamp) that performs outputting to the outside. The input unit 1005 and the output unit 1006 may be configured as a unified body (such as a touch panel).

The units such as the processor 1001 and the memory 1002 are connected to each other via the bus 1007 for transmitting and receiving information. The bus 1007 may be constituted by a single bus or may be configured by different buses for the units.

The base station 10 and the user equipment UE may be configured to include hardware such as a microprocessor, a digital signal processor (DSP), an application specific integrated circuit (ASIC), a programmable logic device (PLD), or a field programmable gate array (FPGA) or a part or all of the functional blocks may be embodied by the hardware. For example, the processor 1001 may be mounted as at least one hardware module.

### <Conclusion>

As described above, according to the embodiments, there is provided a base station of a radio communication system for performing communication by multiplexing a first radio frame having a predetermined TTI length and a second radio frame having a TTI length shorter than the predetermined TTI length, the base station including a scheduler configured to multiplex a signal of the second radio frame in a time period of the first radio frame other than a time period in which a reference signal is transmitted in the first radio frame; and a transmitter configured to multiplex a signal of the first radio frame and the signal of the second radio frame, and configured to transmit, to user equipment, the signal of the first radio frame and the signal of the second radio frame that are multiplexed. According to the base station, it is possible to provide a technique enabling user equipment to appropriately communicate when a radio frame having a predetermined TTI length and a radio frame having a TTI length shorter than the predetermined TTI length are mixed and operated.

The base station may include a reporting unit configured to transmit, to the user equipment, information indicating a time period of the first radio frame in which the signal of the second radio frame is potentially multiplexed. Accordingly, the user equipment UE can have knowledge of a period in which there is a possibility that a signal of the second radio frame is to be multiplexed. In addition, it is possible to reduce a processing load of the user equipment UE that performs communication, for example, using only the second radio frame and to suppress energy consumption of a battery or the like.

Furthermore, according to the embodiment, there is provided user equipment of a radio communication system for performing communication by multiplexing a first radio frame having a predetermined TTI length and a second radio frame having a TTI length shorter than the predetermined TTI length, the user equipment including a retrieving unit configured to retrieve, from a base station, one or more reference signals included in one TTI and information defining, in the one TTI, correspondence between each reference signal and a time period that can be used for demodulation; and a receiver configured to receive the signal transmitted in the first radio frame, and, upon demodulating the received signal transmitted in the first radio frame, configured to perform, based on the information, demodulation for each time period corresponding to a reference signal of the one or more reference signals, using the reference signal of the one or more reference signals received.

According to the user equipment, it is possible to provide a technique enabling user equipment to appropriately communicate when a radio frame having a predetermined TTI length and a radio frame having a TTI length shorter than the predetermined TTI length coexist to be operated.

The time period in the information may further be associated with one or more reference signals included in a TTI other than the one TTI, and, upon demodulating the received signal, the receiver may perform demodulation additionally using the one or more reference signals included in the TTI. Accordingly, for example, the user equipment UE can perform an operation of performing frequency/time synchronization and/or AGC processing using a reference signal transmitted in a TTI prior to the signal to be demodulated in advance, thereby enhancing demodulation accuracy.

Furthermore, according to the embodiments, there is provided user equipment of a radio communication system for performing communication by multiplexing a first radio frame having a predetermined TTI length and a second radio frame having a TTI length shorter than the predetermined TTI length, the user equipment including a retrieving unit configured to retrieve, from a base station, information representing one or more reference signals to be used for demodulating a signal transmitted in the first radio frame; and a receiver configured to switch, upon receiving the signal transmitted in the first radio frame, a reference signal used for demodulation, based on whether the retrieving unit receives the information. According to the user equipment, it is possible to provide a technique enabling user equipment to appropriately communicate when a radio frame having a predetermined TTI length and a radio frame having a TTI length shorter than the predetermined TTI length are mixed and operated.

Furthermore, according to the embodiments, there is provided a signal transmitting method executed by a base station of a radio communication system for performing communication by multiplexing a first radio frame having a predetermined TTI length and a second radio frame having a TTI length shorter than the predetermined TTI length, the signal transmitting method including a step of multiplexing a signal of the second radio frame in a time period of the first radio frame other than a time period in which a reference signal is transmitted in the first radio frame; and a step of multiplexing a signal of the first radio frame and the signal of the second radio frame and transmitting, to user equipment, the signal of the first radio frame and the signal of the second radio frame that are multiplexed. According to the signal transmitting method, it is possible to provide a technique enabling user equipment to appropriately communicate when a radio frame having a predetermined TTI length and a radio frame having a TTI length shorter than the predetermined TTI length are mixed and operated.

### <Supplemental Embodiments>

A reference signal may be abbreviated RS or may be referred to as a pilot depending on an applied standard.

A data channel may be referred to as a physical downlink shared channel, a downlink data channel, or a Physical Downlink Shared Channel (PDSCH). An RU may be referred to as a RB, a subband, a scheduling unit, or a frequency unit.

Notification of resource information is not limited the aspect/embodiment described in the present specification any may be performed by other methods. For example, notification of resource information may be performed via physical layer signaling (for example, Downlink Control Information (DCI) or Uplink Control Information (UCI)), higher-layer signaling (for example, Radio Resource Control (RRC) signaling, MAC signaling, broadcast information (Master Information Block (MIB), or System Information Block (SIB)), other signals, or by a combination thereof. Moreover, RRC signalling may be referred to as an RRC message. Furthermore, the RRC signalling may be an RRC connection setup (RRC Connection Setup) message, a RRC connection reconfiguration (RRC Connection Reconfiguration) message, etc., for example.

The embodiment/examples described in this specification may be applied to a system employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or a next-generation system which is extended on the basis thereof.

The processing sequences, the sequences, the flowcharts, and the like of the embodiment/examples described above in this specification may be changed in the order as long as they are not incompatible with each other. For example, in the method described in this specification, various steps as elements are described in an exemplary order and the method is not limited to the described order.

A specific operation which is performed by the base station in this specification may be performed by an upper node thereof in some cases. In a network including one or more network nodes including a base station, various operations which are performed to communicate with a terminal can be apparently performed by the base station and/or network nodes (for example, an MME or an S-GW can be considered but the network nodes are not limited thereto) other than the base station. A case in which the number of network nodes other than the base station is one has been described above, but a combination of plural different network nodes (for example, an MME and an S-GW) may be used.

Information or the like can be output from an upper layer (or a lower layer) to a lower layer (or an upper layer). The information or the like may be input and output via plural network nodes.

The input and output information or the like may be stored in a specific place (for example, a memory) or may be managed in a management table. The input and output information or the like may be overwritten, updated, or added. The output information or the like may be deleted. The input information or the like may be transmitted to another device.

Information, signals, and the like described in this specification may be expressed using one of various different techniques. For example, data, an instruction, a command, information, a signal, a bit, a symbol, and a chip which can be mentioned in the overall description may be expressed by a voltage, a current, an electromagnetic wave, a magnetic field or magnetic particles, a photo field or photons, or an arbitrary combination thereof.

The terms described in this specification and/or the terms required for understanding this specification may be substituted by terms having the same or similar meanings. For example, a channel and/or a symbol may be a signal.

The terms "system" and "network" which are used in this specification are compatibly used.

The user equipment UE may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The base station 10 may also referred to as NodeB (NB), a base station (Base Station), an access point, a femtocell, a small cell, or several other appropriate terms.

The terms "determining" and "determination" which are used in this specification may include various types of operations. The terms "determining" and "determination" may include that judging, calculating, computing, processing, deriving, investigating, looking up (for example, looking up in a table, a database, or another data structure), and ascertaining are considered to be "determined." The terms "determining" and "determination" may include that receiving (for example, receiving of information), transmitting (for example, transmitting of information), input, output, and accessing (for example, accessing to data in a memory) are considered to be "determined." The terms "determining" and "determination" may include that resolving, selecting, choosing, establishing, and comparing are considered to be "determined." That is, the terms "determining" and "determination" can include that a certain operation is considered to be "determined."

Determination or decision may be made by a value represented by one bit (0 or 1); may be made by a boolean value (Boolean: true of false); or may be made by comparison of numerical values (e.g., comparison with a predetermined value).

Each of the procedures (version 1 through version 3) described in the specification may be used alone, may be used in a combination, or may be switched in accordance with execution. Further, reporting of predetermined information (e.g., reporting of "being X") is not limited to a method that is explicitly executed, and reporting of predetermined information may be executed implicitly (e.g., reporting of the predetermined information is not executed).

An expression "on the basis of" which is used in this specification does not refer to only "on the basis of only," unless apparently described. In other words, the expression "on the basis of" refers to both "on the basis of only" and "on the basis of at least."

Any reference to elements having names such as "first" and "second" which are used in this specification does not generally limit amounts or an order of the elements. The terms can be conveniently used to distinguish two or more elements in this specification. Accordingly, reference to first and second elements does not mean that only two elements are employed or that the first element has to precede the second element in any form.

As long as terms "include" and "including" and modifications thereof are used in this specification or the claims, the terms are intended to have a comprehensive meaning similar to a term "comprising." A term "or" which is used in this specification or the claims is intended not to mean an exclusive logical sum.

A radio frame may include one or more frames in the time domain. The one or more frames in the time domain may be referred to as sub-frames. The sub-frame may include one or more slots in the time domain. The slot may include one or more symbols (such as an OFDM symbol or an SC-FDMA symbol) in the time domain. All of the radio frame, the sub-frame, the slot, and the symbol are time units for transmitting a signal. The radio frame, the sub-frame, the slot, and the symbol may be referred to as other corresponding names. For example, in the LTE system, a base station performs scheduling of allocating radio resources (such as frequency bandwidths or transmitting power which can be used in the units of user equipment) to units of user equipment. A minimum time unit of the scheduling may be referred to as a transmission time interval (TTI). For example, one sub-frame may be referred to as a TTI, a plurality of contiguous sub-frames may be referred to as a TTI, or one slot may be referred to as a TTI. A resource block (RB) is a unit of resource allocation in the time domain and the frequency domain, and may include one or more contiguous subcarriers in the frequency domain. In the time domain of the resource block, the resource block may include one or more symbols or may have a length of one slot, one sub-frame, or one TTI. One TTI or one sub-frame may include one or more resource blocks. The above-mentioned structure of a radio frame is only an example, and the number of sub-frames included in one radio frame, the number of slots included in one sub frame, the number of symbols and the number of resource blocks included in one slot, and the number of subcarriers included in one resource block can be variously changed.

In the entire disclosure, for example, when an article such as a, an, or the is added in translation into English, such an article is deemed to include a plurality of things, unless as otherwise indicated clearly by the context.

The present invention is described above in detail. However, it is apparent to those skilled in the art that the invention is not limited to the embodiments described in the specification. The invention can be implemented as a modified embodiment or an altered embodiment without departing from the gist and scope of the present invention defined by the claims. Accordingly, the descriptions of this specification are for a purpose of exemplification, and the descriptions of this specification do not have any restrictive meaning.

This international patent application is based on and claims priority to Japanese Patent Application No. 2016-158267 filed on August 10, 2016, and the entire content of Japanese Patent Application No. 2016-158267 is incorporated herein by reference.

### LIST OF REFERENCE SYMBOLS

- UE: user equipment

- 10: base station
- 101: signal transmitting unit
- 102: signal receiving unit
- 103: acquisition unit
- 201: signal transmitting unit
- 202: signal receiving unit
- 203: scheduling unit
- 204: reporting unit
- 1001: processor
- 1002: memory
- 1003: storage
- 1004: communication unit
- 1005: input unit
- 1006: output unit

## Claims

1. A base station of a radio communication system for performing communication by multiplexing a first radio frame having a predetermined TTI length and a second radio frame having a TTI length shorter than the predetermined TTI length, the base station comprising:
a scheduler configured to multiplex a signal of the second radio frame in a time period of the first radio frame other than a time period in which a reference signal is transmitted in the first radio frame; and
a transmitter configured to multiplex a signal of the first radio frame and the signal of the second radio frame, and configured to transmit, to user equipment, the signal of the first radio frame and the signal of the second radio frame that are multiplexed.

2. The base station according to claim 1, further comprising:
a reporting unit configured to transmit, to the user equipment, information indicating a time period of the first radio frame in which the signal of the second radio frame is potentially multiplexed.

3. User equipment of a radio communication system for performing communication by multiplexing a first radio frame having a predetermined TTI length and a second radio frame having a TTI length shorter than the predetermined TTI length, the user equipment comprising:
a retrieving unit configured to retrieve, from a base station, one or more reference signals included in one TTI and information defining, in the one TTI, correspondence between each reference signal and a time period that can be used for demodulation; and
a receiver configured to receive the signal transmitted in the first radio frame, and, upon demodulating the received signal transmitted in the first radio frame, configured to perform, based on the information, demodulation for each time period corresponding to a reference signal of the one or more reference signals, using the reference signal of the one or more reference signals received.

4. The user equipment according to claim 3, wherein the time period in the information is further associated with one or more reference signals included in a TTI other than the one TTI, and
wherein, upon demodulating the received signal, the receiver performs demodulation additionally using the one or more reference signals included in the TTI.

5. User equipment of a radio communication system for performing communication by multiplexing a first radio frame having a predetermined TTI length and a second radio frame having a TTI length shorter than the predetermined TTI length, the user equipment comprising:
a retrieving unit configured to retrieve, from a base station, information representing one or more reference signals to be used for demodulating a signal transmitted in the first radio frame; and
a receiver configured to switch, upon receiving the signal transmitted in the first radio frame, a reference signal used for demodulation, based on whether the retrieving unit receives the information.

6. A signal transmitting method executed by a base station of a radio communication system for performing communication by multiplexing a first radio frame having a predetermined TTI length and a second radio frame having a TTI length shorter than the predetermined TTI length, the signal transmitting method comprising:
a step of multiplexing a signal of the second radio frame in a time period of the first radio frame other than a time period in which a reference signal is transmitted in the first radio frame; and
a step of multiplexing a signal of the first radio frame and the signal of the second radio frame and transmitting, to user equipment, the signal of the first radio frame and the signal of the second radio frame that are multiplexed.
